# EUROPEAN PATENT SPECIFICATION

(11) **EP 3 962 054 B1**
(45) Date of publication and mention of the grant of the patent: **18.06.2025**
(21) Application number: 20794999.1
(22) Date of filing: 24.03.2020
(51) Int. Cl.: H04M 11/00, H04W 8/22, H04W 76/10, H04W 12/06, H04W 84/12, H04M 1/00, H04L 69/24, H04W 4/50, H04W 8/24, H04W 12/03, H04W 92/18

(54) **COMMUNICATION DEVICE, CONTROL METHOD OF COMMUNICATION DEVICE, AND PROGRAM**
KOMMUNIKATIONSVORRICHTUNG, STEUERUNGSVERFAHREN DER KOMMUNIKATIONSVORRICHTUNG UND PROGRAMM
DISPOSITIF DE COMMUNICATION, PROCÉDÉ DE COMMANDE DE DISPOSITIF DE COMMUNICATION, ET PROGRAMME

(30) Priority: 22.04.2019 JP 2019081068
(43) Date of publication of application: 02.03.2022
(73) Proprietor: CANON KABUSHIKI KAISHA, OHTA-KU Tokyo 146-8501 (JP)
(72) Inventor: MINAKAWA Atsushi, Tokyo 146-8501 (JP)
(74) Representative: Canon Europe Limited
(86) International application number: PCT/JP2020/012825
(87) International publication number: WO 2020/217811

(56) References cited:
- WO-A1-2019/021770
- JP-A- 2018 042 058
- US-A1- 2011 219 427
- US-B1- 10 169 587
- ANONYMOUS: "Device Provisioning Protocol Specification", 1 April 2018 (2018-04-01), pages 1 - 124, XP055670685

## Description

### Technical Field

The present invention relates to a communication device and a control method for the communication device that provides communication parameters.

### Background Art

In order for a communication device to connect to a wireless network, various communication parameters required in wireless communication, such as a cryptosystem, encryption key, authentication method, and authentication key, need to be set to the communication device. As technology of setting these communication parameters to the communication device, the Wi-Fi Device Provisioning Protocol (hereinafter abbreviated as "DPP") has been established (PTL 1).

In DPP, there are a device called a configurator that provides communication parameters, and a device called an enrollee that requests and obtains communication parameters. Having obtained communication parameters from the configurator, the enrollee becomes either a station (hereinafter abbreviated as "STA") or an access point (hereinafter abbreviated as "AP") in the IEEE 802.11 standard.

### Citation List

### Patent Literature

PTL 1: U.S. Patent Application Publication No. 2017/0295448

### Summary of Invention

### Technical Problem

When providing communication parameters using DPP, the configurator gives identification information called AKM (Authentication and Key Management) for identifying the type of communication parameters provided.

As the version of DPP is updated and functions are extended in the future, AKM may be appended with a new type. However, even if the configurator provides communication parameters of a type identified by a new AKM type, the enrollee does not always support function extensions, that is, the new version of DPP. The enrollee not supporting such function extensions is unable to recognize the new AKM type in the provided communication parameters, and may wrongly determine the communication parameters as invalid.

Therefore, the enrollee may discard the provided communication parameters, and may not be able to connect to a wireless network.

In view of the above problem, it is an object of the present invention to be able to provide, to a partner device, communication parameters of a type according to the version of DPP supported by the partner device.

US patent no. US10169587 is entitled "Hosted device provisioning protocol with servers and a networked initiator" and describes a network which can operate a WiFi access point with credentials. An unconfigured device can (i) support a Device Provisioning Protocol (DPP), (ii) record responder bootstrap public and private keys, and (iii) be marked with a tag. The network can record initiator bootstrap public and private keys, as well as derived initiator ephemeral public and private keys. An initiator can (i) operate a DPP application, (ii) read the tag, (iii) establish a secure and mutually authenticated connection with the network, and (iv) send the network data within the tag. The network can record the responder bootstrap public key and derive an encryption key with the (i) recorded responder bootstrap public key and (ii) derived initiator ephemeral private key. The network can encrypt credentials using the derived encryption key and send the encrypted credentials to the initiator, which can forward the encrypted credentials to the device, thereby supporting a device configuration. US patent application publication no. US2011/219427 describes Techniques for simplifying an authentication process from the viewpoint of a user while providing improved security to the many users currently employing no or weak security techniques. In logging into a web site hosted by a web server, a session begins by a user connecting and logging in with a device, such as a personal computer. Rather than a user name and password approach which is presently typical, the personal computer communicates with another user device, such as a smart phone. In one approach, an encoded acoustic signal is employed for this communication. The smart phone securely communicates with an authentication server which informs the web server whether the user has been authenticated or not. Solution to Problem

To solve the above problem and in accordance with the present invention, there is provided a communication device as recited in claim 1 of the accompanying claims. Advantageous Effects of Invention

According to the present invention, a communication parameter of a type according to the version of DPP supported by a partner device may be provided to the partner device.

### Brief Description of Drawings

[Fig. 1] Fig. 1 is a diagram illustrating an example of the network configuration of a communication system according to each embodiment of the present invention.
[Fig. 2] Fig. 2 is a diagram illustrating an example of the hardware configuration and the functional configuration of a communication device according to each embodiment.
[Fig. 3] Fig. 3 is a flowchart illustrating an example of a procedure of a communication parameter providing process executed by the communication device according to each embodiment.
[Fig. 4] Fig. 4 is a flowchart illustrating an example of a detailed procedure of an AKM setting process in S9 in Fig. 3.
[Fig. 5] Fig. 5 is a diagram illustrating an example of the operation sequence of an authentication and communication parameter providing process executed between a configurator and an enrollee included in the communication system according to each embodiment.

### Description of Embodiments

Hereinafter, an embodiment of the present invention will be described in detail with reference to the accompanying drawings. Note that the embodiment described below is an example as means for realizing the present invention, and modifications or changes shall be appropriately made depending on the configuration of a device to which the present invention is applied or various conditions. The present invention is not construed as being limited to the following embodiment. All combinations of features described in the present embodiment are not necessarily required in a solution of the present invention.

In the present embodiment hereinafter, an example in which communication parameters required in wireless LAN communication are set to a communication device using Wi-Fi Device Provisioning Protocol (DPP) will be described. In DPP here, a communication device that holds communication parameters required in wireless LAN communication functions as a configurator, and provides the communication parameters to another communication device. In contrast, a communication device to which the communication parameters are provided functions as an enrollee, sets the provided communication parameters therein, and connects to a wireless network. The enrollee may operate either as an access point (AP) or a station (STA).

In the present embodiment, an example in which a communication system uses a wireless LAN system conforming to the IEEE (The Institute of Electrical and Electronics Engineers, Inc.) 802.11 series will be described. However, the communication format in the present embodiment is not limited to a wireless LAN conforming to the IEEE 802.11 series, and other communication formats may be used.

### <Network Configuration in Present Embodiment>

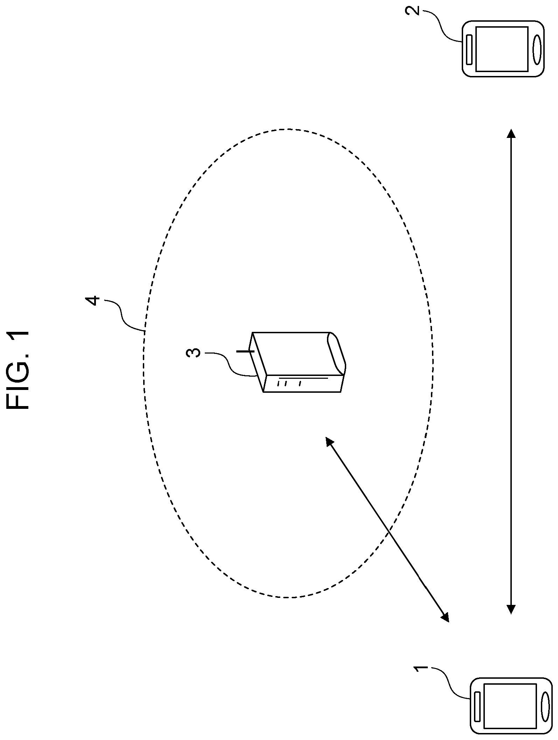

Fig. 1 is a diagram illustrating an example of the network configuration of a communication system according to the present embodiment.

A communication system in Fig. 1 includes wireless terminals 1 and 2, and an access point 3.

The wireless terminal 1 has a wireless LAN (Local Area Network) communication function, and operates as, for example, a configurator specified in DPP. Therefore, the wireless terminal 1 may provide communication parameters for connecting to a wireless LAN network 4 to the wireless terminal 2, and may provide communication parameters for configuring the wireless LAN network 4 to the access point (AP) 3.

The wireless terminal 2 has a wireless LAN communication function, and, for example, is a station (STA) operating as an enrollee specified in DPP. Therefore, the wireless terminal 2 obtains communication parameters from the wireless terminal 1 operating as a configurator, and, on the basis of the obtained communication parameters, connects to the wireless LAN network 4 configured by the AP 3.

The AP 3 operates as, for example, an access point (AP) specified in DPP, and, on the basis of communication parameters provided by the wireless terminal 1, configures the wireless LAN network 4.

The wireless LAN network 4 is, for example, a wireless LAN network configured by the AP 3.

The communication parameters include setting items required for executing wireless communication, such as an SSID (Service Set Identification), which is a network identifier, cryptosystem, encryption key, and authentication method.

The communication parameters also include AKM (Authentication and Key Management). AKM is information that indicates which authentication protocol or key exchange algorithm is used at the time of wireless communication, and is identification information for identifying the type of communication parameters.

For example, if AKM is "dpp", the communication parameters include a connector which is information for connecting to an AP that supports DPP. This connector includes various types of information used in the authentication protocol or key exchange algorithm defined by DPP.

If AKM is "sae", the communication parameters include a password which is information for connecting to an AP that does not support DPP. This password is used in WPA (Wi-Fi Protected Access) 3 wireless communication.

If AKM is "psk", the communication parameters include a PSK (Pre Shared Key)/passphrase which is information for connecting to an AP that does not support DPP. This PSK/passphrase is used in WPA2 wireless communication. The password and the PSK/passphrase are encryption keys for implementing authentication/key exchange based on WPA or IEEE (The Institute of Electrical and Electronics Engineers, Inc.) 802.11.

In Fig. 1, it is only necessary that each wireless terminal in the present embodiment be a device capable of performing wireless communication with another wireless terminal, and each wireless terminal is not limited to that illustrated. A wireless terminal may be another device such as a cellular phone, smartphone, digital camera, PC, camcorder, smart watch, or Personal Digital Assistance (PDA). In addition, although two wireless terminals are illustrated in Fig. 1, the number of wireless terminals is not limited to two, and there may be three or more wireless terminals.

### <Hardware Configuration of Communication Device>

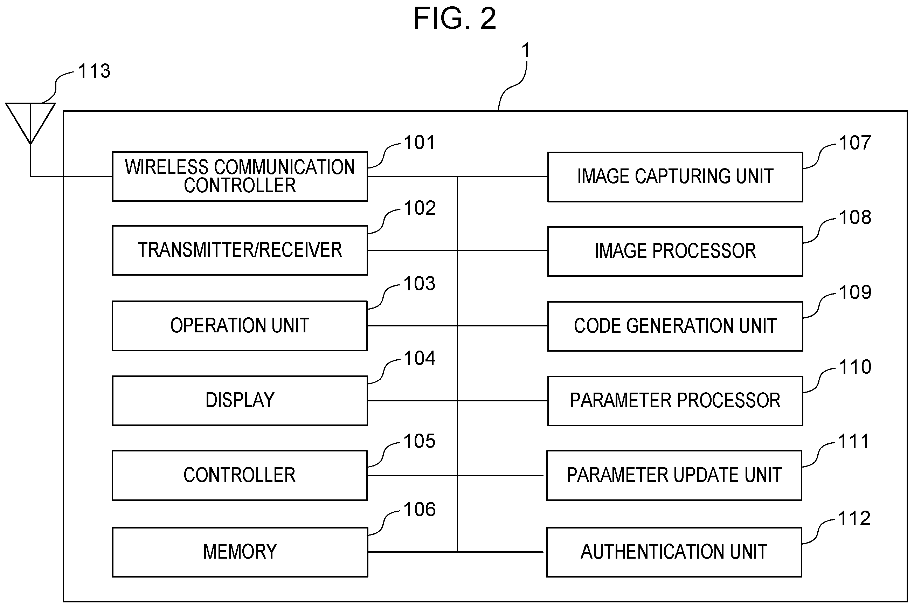

Fig. 2 is a diagram illustrating an example of the hardware configuration and the functional configuration of the wireless terminal 1 according to the present embodiment. Note that the functional configuration of the wireless terminal 2 is the same as the wireless terminal 1.

Each functional unit illustrated in Fig. 2 may be realized by executing, by one or more CPUs (not illustrated), a program stored in a memory 106. That is, each flowchart described later may be realized by executing, by one or more CPUs, a program stored in the memory 106 and executing information calculation and processing and control of each piece of hardware. Note that some or all of the functional units illustrated in Fig. 2 may be realized by dedicated hardware.

The wireless terminal 1 in Fig. 2 includes a wireless communication controller 101, a transmitter/receiver 102, an operation unit 103, a display 104, a controller 105, the memory 106, an image capturing unit 107, and an image processor 108. The wireless terminal 1 further includes a code generation unit 109, a parameter processor 110, a parameter update unit 111, an authentication unit 112, and an antenna 113.

The wireless communication controller 101 applies control to the antenna 113 and a wireless circuit (not illustrated) in order to transmit/receive wireless signals in wireless LAN communication conforming to the IEEE 802.11 series to/from another wireless terminal. The wireless communication controller 101 may be configured by a chip that executes wireless LAN communication.

The transmitter/receiver 102 performs data transmission/reception control according to the protocol of each communication layer via the wireless communication controller 101.

The operation unit 103 is used by the user to operate the wireless terminal 1, and may include a button for activating the image capturing unit 107. Note that the operation unit 103 may be configured by hardware, or may be configured by a UI (User Interface) provided by software using the display 104.

The display 104 is configured by an LCD (Liquid Crystal Display), an LED (Light Emitting Diode), or the like, and performs various types of display processing. The display 104 may have an audio output function, such as a loudspeaker.

The controller 105 is configured to comprehensively control the operation of the wireless terminal 1, and controls the components (101 to 104 and 106 to 112) via a system bus. That is, the controller 105 loads necessary programs from the memory 106 when executing various types of processing, and realizes various functional operations by executing the programs. The controller 105 is configured by, for example, one or more CPUs (Central Processing Units).

The memory 106 stores control programs executed by the controller 105, and various types of data such as image data and communication parameters. Various operations described later are realized by executing, by the controller 105, control programs stored in the memory 106. The memory 106 functions as a main memory or work area for the controller 105, and may include RAM (Random Access Memory) that temporarily stores programs and data. The memory 106 may also include ROM (Read Only Memory), which is a non-volatile memory that stores control programs and parameters requiring no changes, which are needed by the controller 105 to execute various types of processing. The memory 106 may further include an external storage medium, such as an HDD (Hard Disk Drive), flash memory, or detachable SD (Secure Digital) card.

The image capturing unit 107 is configured by an imaging element, lens, and so forth, and executes image capturing of still images and video images. In the present embodiment, the image capturing unit 107 captures an image of one-dimensional code such as barcode or two-dimensional code such as QR code (registered trademark).

The image processor 108 performs image processing of images captured by the image capturing unit 107. In the present embodiment, the image processor 108 analyzes an image of QR code captured by the image capturing unit 107, and decrypts the encrypted information to obtain QR code information.

The code generation unit 109 executes control for generating QR code information of the wireless terminal 1, and displaying the generated QR code information as QR code (image) on the display 104. Although an example in which an image to be read by the image capturing unit 107 is QR code is described in the present embodiment, code information usable in the present embodiment is not limited to QR code, and one-dimensional code such as barcode or other types of two-dimensional code may be used.

The parameter processor 110 performs processing for providing and obtaining communication parameters for connecting to the wireless LAN network 4.

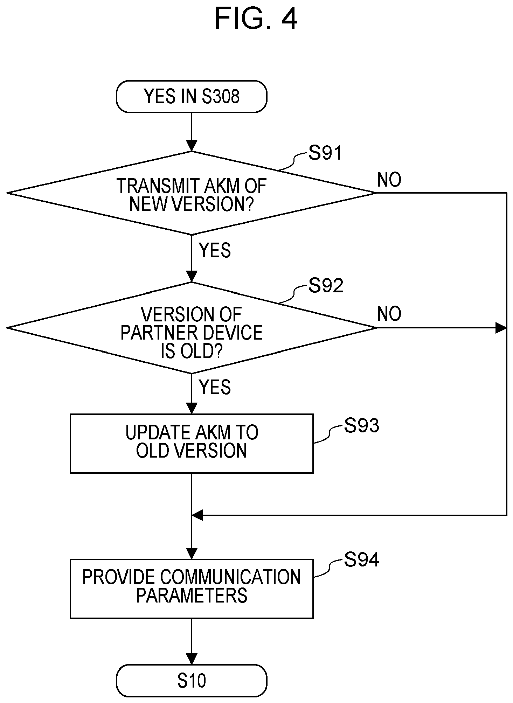

The parameter update unit 111 performs various types of update processing regarding a communication parameter providing process. For example, the parameter update unit 111 updates AKM, which is identification information for identifying communication parameters. In the present embodiment, if an enrollee determines certain AKM as invalid, a configurator updates AKM to be included in communication parameters. A process of setting this updated AKM will be described in detail later with reference to Fig. 4.

The authentication unit 112 performs control (authentication processing) for authenticating another communication device.

The antenna 113 is capable of communicating in the 2.4 GHz band and/or the 5 GHz band for wireless LAN communication.

Note that the above-described functional blocks are only exemplary, and plural functional blocks may configure one functional block, or any functional block may be further separated into plural blocks for performing plural functions.

### <Communication Parameter Providing Process of Configurator>

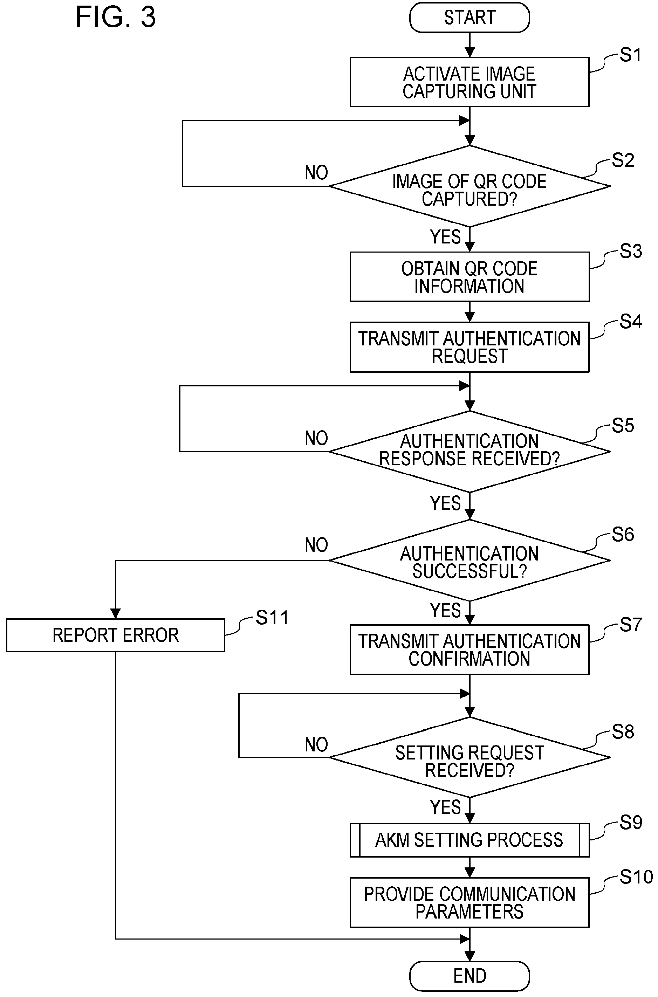

Referring to Figs. 3 and 4, a process of providing communication parameters specified in DPP in order to allow, by the wireless terminal 1 operating as a configurator, the wireless terminal 2 operating as an enrollee to connect to a wireless network will be described.

In the wireless terminal 1, for example, the communication parameter providing process illustrated in Fig. 3 is activated in response to a trigger which is an input from a user using the operation unit 103 of a command for providing parameters.

In S1, the controller 105 of the wireless terminal 1 activates the image capturing unit 107 in order to capture images including QR code displayed by the wireless terminal 2. An image of QR code captured in S1 includes a public key for authentication of the wireless terminal 2.

In S2, the controller 105 determines whether the image capturing unit 107 has captured an image of QR code. Here, QR code displayed by the wireless terminal 2 is not limited to QR code displayed on the display 104 of the wireless terminal 2, and may be QR code printed on a label attached to the housing or accessory of the wireless terminal 2. Alternatively, QR code may be written on, for example, the instructions of the wireless terminal 2. If no image of QR code is captured within a certain time after the activation of the image capturing unit 107 in S1, the process times out, and the wireless terminal 1 may end the communication parameter providing process.

If it is not determined that an image of QR code has been captured (S2: N), the process returns to S2, and the controller 105 of the wireless terminal 1 waits for an image of QR code to be captured.

In contrast, if it is determined that an image of QR code has been captured (S2: Y), the process proceeds to S3, and the image processor 108 of the wireless terminal 1 obtains, from the captured image of the QR code, QR code information including the public key for authentication of the wireless terminal 2.

In S4, the authentication unit 112 of the wireless terminal 1 transmits an authentication request to the wireless terminal 2 via the transmitter/receiver 102.

The authentication request transmitted in S4 by the wireless terminal 1, which is a configurator, to the wireless terminal 2, which is an enrollee, is, for example, a DPP Authentication Request frame specified in the DPP standard.

This authentication request includes authentication information used in authentication, identification information of the wireless terminal 1, a random number, and a public key for shared key generation. This authentication information may be the hash value of the public key for authentication of the wireless terminal 2, which is included in the QR code obtained in S3. The identification information of the wireless terminal 1 may be the hash value of a public key for authentication of the wireless terminal 1. The random number may be used for authentication on receipt of an authentication response described later. The public key for shared key generation may be a key serving as the generation source of a shared key generated between the wireless terminal 1 and the wireless terminal 2.

On receipt of the authentication request transmitted in S4, the wireless terminal 2 determines whether the device that has transmitted the authentication request is the wireless terminal 1 which has captured the image of the QR code. Determination of whether the device that has transmitted the authentication request is the wireless terminal 1 which has captured the image of the QR code may be performed using authentication information included in the authentication request.

Specifically, the wireless terminal 2 calculates the hash value of the public key included in the QR code displayed on the display 104 of the wireless terminal 2, compares the calculated hash value and the hash value (authentication information) included in the authentication request, and, if the two hash values match, determines that the verification is successful. It is assumed that a hash function used in calculating the hash value here is agreed in advance with the wireless terminal 1 transmitting the authentication request.

After transmitting the authentication request to the wireless terminal 2 in S4, the transmitter/receiver 102 of the wireless terminal 1 waits for reception of an authentication response from the wireless terminal 2 in S5. While no authentication response is received from the wireless terminal 2 (S5: N), the process returns to S5 and an authentication response waiting process is repeated. If no authentication response is received from the wireless terminal 2 within the time, the process times out, and the communication parameter providing process may end.

The authentication response is, specifically, for example, a DPP Authentication Response frame specified in the DPP standard. This authentication response includes a public key for shared key generation, random number, and tag information of the wireless terminal 2.

On receipt of an authentication response from the wireless terminal 2 (S5: Y), in S6, the authentication unit 112 of the wireless terminal 1 verifies the contents of the received authentication response, and determines whether the authentication is successful.

Specifically, at first, the authentication unit 112 of the wireless terminal 1 generates a shared key by using both of the public key for shared key generation of the wireless terminal 2, which is included in the authentication response, and a secret key for shared key generation of the wireless terminal 1 itself. Note that this is a shared key generating method of the wireless terminal 1 operating as a configurator. The wireless terminal 2 operating as an enrollee generates a shared key by using both the public key for shared key generation of the wireless terminal 1, and a secret key for shared key generation of the wireless terminal 2.

A shared key may be generated on the basis of, for example, ECDH (Elliptic Curve Diffie-Hellman). Although it is assumed hereinafter that a shared key be generated on the basis of ECDH, this is not the only possible method, and a shared key may be generated on the basis of other public key cryptosystems.

Following the generation of the shared key, the authentication unit 112 of the wireless terminal 1 determines whether the authentication is successful by using the tag information included in the authentication response. The tag information is, specifically, information obtained by encrypting the random number included in the authentication response transmitted by the wireless terminal 1 with a shared key generated by using both of the secret key for shared key generation of the wireless terminal 2 and the public key for shared key generation of the wireless terminal 1.

The authentication unit 112 of the wireless terminal 1 determines that the authentication is successful in the case where the tag information included in the authentication request has been correctly decrypted with the shared key generated by the wireless terminal 1. The authentication unit 112 of the wireless terminal 1 determines that the authentication is successful in the case where the tag information has been decrypted with the shared key generated by the wireless terminal 1, and determines that the authentication is unsuccessful in the case where the tag information has not been decrypted.

In the case where it is determined in S6 that the authentication is unsuccessful (S6: N), the process branches to S11, and the controller 105 of the wireless terminal 1 displays a message indicating an authentication error on the display 104, and ends the parameter providing process. In contrast, in the case where it is determined that the authentication is successful (S6: Y), the process proceeds to S7, and the authentication unit 112 of the wireless terminal 1 transmits authentication confirmation to the wireless terminal 2 via the transmitter/receiver 102.

The authentication confirmation is, specifically, for example, a DPP Authentication Confirm frame specified in the DPP standard. The authentication confirmation includes tag information. This tag information is one obtained by encrypting the random number, which is included in the authentication response transmitted by the wireless terminal 2, with the generated shared key.

In S8, after transmitting the authentication confirmation in S7, the transmitter/receiver 102 of the wireless terminal 1 waits for a communication parameter setting request to be transmitted from the wireless terminal 2, which is an enrollee.

In contrast, the wireless terminal 2 receives the authentication confirmation transmitted from the wireless terminal 1 in S7, and, in the case where the tag information included in the authentication confirmation is correctly decrypted with the shared key generated by the wireless terminal 2, determines that the authentication is successful.

If it is determined that the authentication is successful, the wireless terminal 2 sets the wireless terminal 1, which has transmitted the authentication request, as a configurator, and transmits a communication parameter setting request to the wireless terminal 1.

The setting request is, specifically, for example, a DPP Configuration Request frame specified in the DPP standard. The setting request includes the device information and role information of the wireless terminal 2. The device information is, for example, the device name of the wireless terminal 2. The role information is information indicating the role after receiving the communication parameters, and is "access point (AP)" or "station (STA)". Information included in the setting request is encrypted with a shared key used in generating, by the wireless terminal 2, tag information included in the authentication response.

While no setting request is received from the wireless terminal 2 (S8: N), the process returns to S8 and waits for a setting request from the wireless terminal 2. In contrast, on receipt of a setting request from the wireless terminal 2 (S8: Y), the process proceeds to S9.

In S9, the parameter processor 110 and the parameter update unit 111 of the wireless terminal 1 execute a process of setting AKM to communication parameters to be provided to the wireless terminal 2. The process of setting AKM will be described in detail later with reference to Fig. 4.

In S10, the parameter processor 110 of the wireless terminal 1 provides communication parameters to the wireless terminal 2 via the transmitter/receiver 102.

Specifically, the parameter processor 110 of the wireless terminal 1 transmits a setting response including communication parameters for configuring the wireless LAN network 4 to the wireless terminal 2 via the transmitter/receiver 102. This setting response is, for example, a DPP Configuration Response frame specified in the DPP standard. The setting response includes communication parameters, the expiration date of the parameters, a public key dedicated to the wireless terminal 1 as a configurator, and role information. Information included in the setting request is encrypted with the shared key used in generating tag information included in S7.

Note that the communication parameters provided in S10 include a connector, password, PSK/passphrase, and AKM. The wireless terminal 2 operating as an enrollee may determine, on the basis of the value of AKM, whether each of the connector, password, and PSK/passphrase is included in the communication parameters.

After transmitting the setting request, the wireless terminal 2 waits for a setting response to be transmitted from the wireless terminal 1 operating as a configurator. On receipt of the setting response, the wireless terminal 2 decrypts the communication parameters included in the setting response with the shared key used in generating the tag information. The wireless terminal 2 sets therein the communication parameters obtained by the decryption, thereby becoming connectable to the wireless LAN network 4.

### <Details of AKM Setting Process of Wireless Terminal 1>

Next, with reference to Fig. 4, the AKM setting process executed by the wireless terminal 1 in S9 in Fig. 3 will be described in detail.

The case will be considered in which the wireless terminal 1, which supports DPP function extensions, provides communication parameters including AKM added by function extensions to the wireless terminal 2, which does not support DPP function extensions. In this case, because the value of AKM included in the communication parameters is unknown, the wireless terminal 2 determines it as invalid and, as a result, discards the communication parameters, making the wireless terminal 2 unconnectable to the wireless LAN network 4.

In the present embodiment, in order to prevent the wireless terminal 2 from determining the value of AKM as invalid, communication parameters including AKM recognizable by the wireless terminal 2 are provided.

Hereinafter, a process of providing, from the wireless terminal 1 to the wireless terminal 2, communication parameters including AKM updated to be recognizable even by the wireless terminal 2, which does not support DPP function extensions, will be described in the present embodiment.

Fig. 4 is a flowchart illustrating a process of determining, by the wireless terminal 1 which wants to provide communication parameters including AKM added by DPP function extensions, whether the wireless terminal 2 supports function extensions, and providing communication parameters to the wireless terminal 2.

On receipt of a communication parameter setting request in S8 illustrated in Fig. 3 (S8: Y), in S91, the controller 105 of the wireless terminal 1 determines whether AKM included in communication parameters to be provided to the wireless terminal 2 is AKM added by DPP function extensions.

AKM added by function extensions is, for example, a value indicating communication parameters of "WPA4", which is the successor of WPA3, or a value indicating communication parameters of plural types as in "both DPP and WPA3".

If it is determined that AKM included in communication parameters to be provided to the wireless terminal 2 is not AKM added by function extensions (S91: N), the process skips S92 and S93 and proceeds to S94. In S94, the parameter processor 110 of the wireless terminal 1 transmits, as a setting response, the communication parameters to the wireless terminal 2 via the transmitter/receiver 102, without changing AKM by the parameter update unit 111.

In contrast, if it is determined that AKM is AKM added by function extensions (S91: Y), the process proceeds to S92, and the controller 105 of the wireless terminal 1 determines whether the wireless terminal 2 supports function extensions. That is, in this step, it is determined which version of DPP is supported by the wireless terminal 2.

Whether the wireless terminal 2 supports function extensions may be determined from, for example, information included in an authentication response or a setting request transmitted by the wireless terminal 2. Specifically, this may be determined on the basis of whether a certain flag bit is set in a certain field of the authentication response or the setting request. Alternatively, this may be determined on the basis of version information indicated by a numeral, such as "1" or "2", reported by being included in the authentication response or the setting request. It is assumed that the version information includes, besides version information directly indicated by a numeral in the latter case, information on functions supported by the wireless terminal 2 indicated by a flag bit in the former case. In addition, if no information for determining whether the wireless terminal 2 supports function extensions has been received from the wireless terminal 2, it may be determined that the wireless terminal 2 does not support function extensions. For example, it may be determined that the wireless terminal 2 does not support function extensions if the above-mentioned certain field or information indicating the version itself is not included in the authentication response or the setting request.

If it is determined that the version of the wireless terminal 2 is not old and the wireless terminal 2 supports function extensions (S92: N), the parameter processor 110 transmits, as a setting response, the communication parameters to the wireless terminal 2 via the transmitter/receiver 102, without changing AKM by the parameter update unit 111.

In contrast, if it determined that the wireless terminal 2 does not support function extensions (S92: Y), the process proceeds to S93.

In S93, the parameter update unit 111 of the wireless terminal 1 updates AKM included in the communication parameters to an AKM value not added by function extensions, that is, an AKM value supported before function extensions.

In S94, the parameter processor 110 of the wireless terminal 1 transmits, as a setting response, the communication parameters with the updated AKM to the wireless terminal 2 via the transmitter/receiver 102.

Note that the AKM update process specifically updates AKM to either "dpp" or "sae" supported before function extensions in the case where AKM to be transmitted by the wireless terminal 1 is, for example, a value indicating information on plural connection destinations as in "both DPP and WPA3". In addition, in the case of information on a connection destination whose standard version is identified by a numeral such as "1" or "2" as in WPA, if to-be-transmitted AKM is a value indicating "WPA4" or "both WPA4 and WPA3", "sae" indicating WPA3, which is the predecessor standard, is selected, and AKM is updated. Alternatively, AKM may always be updated to certain AKM, such as "dpp", regardless of to-be-transmitted AKM.

### <Operation Sequence of Communication Parameter Providing Process Between Configurator and Enrollee>

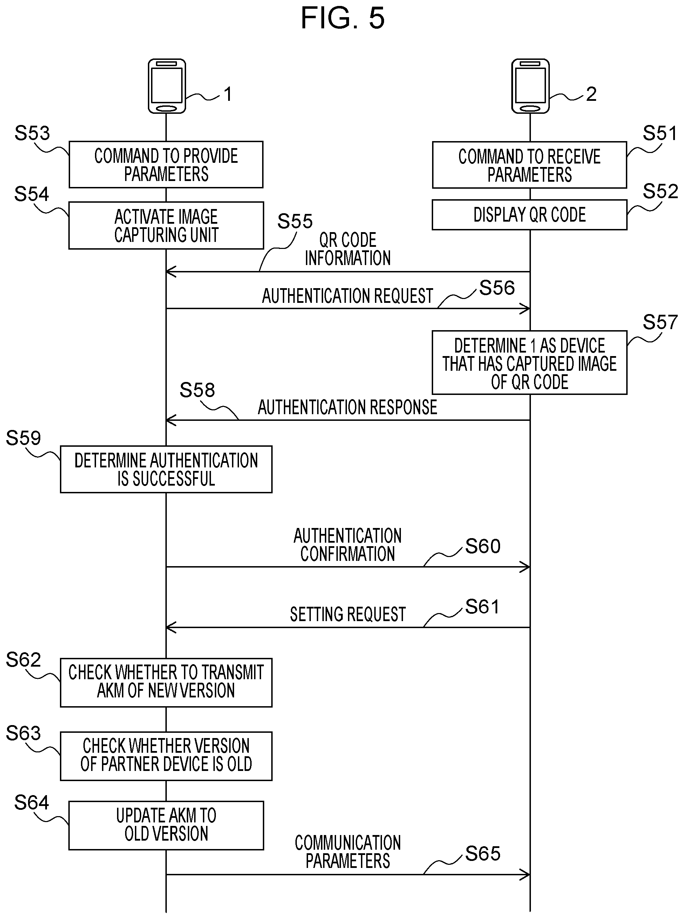

Fig. 5 illustrates an example of the operation sequence of a communication parameter providing process between the wireless terminal 1, which is a configurator, and the wireless terminal 2, which is an enrollee.

In S51, the wireless terminal 2 receives, from a user via the operation unit 103, a command to receive communication parameters.

In S52, the wireless terminal 2 displays QR code on the display 104 and waits for an authentication request from the wireless terminal 1. If no authentication request is received within a certain time, the wireless terminal 2 may end waiting for an authentication request. In addition, the wireless terminal 2 need not include the display 104 for displaying QR code. If QR code is printed on a label attached to the housing or accessory of the wireless terminal 2, S52 may be skipped. In this case, on receipt of a command to receive parameters in S51, the wireless terminal 2 waits for an authentication request without performing the processing in S52.

In contrast, in S53, the wireless terminal 1 receives, from a user via the operation unit 103, a command to provide communication parameters.

In S54, the wireless terminal 1 activates the image capturing unit 107 in order to capture an image of the QR code displayed by the wireless terminal 2.

In S55, the image capturing unit 107 of the wireless terminal 1 captures an image of the QR code displayed by the wireless terminal 2, thereby obtaining QR code information indicated by the QR code.

In S56, the authentication unit 112 of the wireless terminal 1, which has obtained the QR code information indicated by the QR code, generates and transmits an authentication request (DPP Authentication Request) via the transmitter/receiver 102 to the wireless terminal 2, and the wireless terminal 2 receives the authentication request.

In S57, the wireless terminal 2 verifies the contents of the authentication request received from the wireless terminal 1 in S56. The details of a process of verifying the authentication request are as described above with reference to Fig. 3.

In response to verification that the wireless terminal 1, which has transmitted the authentication request, is a device that has captured the image of the QR code, in S58, the wireless terminal 2 generates and transmits an authentication response (DPP Authentication Response) to the wireless terminal 1. The wireless terminal 2, which has transmitted the authentication response to the wireless terminal 1, waits for authentication confirmation to be transmitted from the wireless terminal 1.

In S59, the wireless terminal 1 verifies the contents of the authentication response received from the wireless terminal 2 in S58. The details of a process of verifying the authentication response are as described above with reference to Fig. 3.

In S60, if it is determined that the authentication is successful, the authentication unit 112 of the wireless terminal 1 transmits authentication confirmation (DPP Authentication Confirm) to the wireless terminal 2 via the transmitter/receiver 102.

On receipt of the authentication confirmation from the wireless terminal 1, the wireless terminal 2 verifies the contents of the authentication confirmation. The wireless terminal 2 determines that the authentication is successful in the case where tag information has been correctly decrypted with a shared key generated by the wireless terminal 2.

If it is determined that the authentication is successful, in S61, the wireless terminal 2 transmits a setting request (DPP Configuration Request) in order to perform a communication parameter setting process, and waits for a setting response to be transmitted from the wireless terminal 1.

In S62, the parameter processor 110 of the wireless terminal 1, which has received the setting request from the wireless terminal 2, determines whether to-be-transmitted communication parameters include AKM added by function extensions.

If it is determined that AKM is AKM added by function extensions, in S63, the parameter processor 110 of the wireless terminal 1 determines whether the wireless terminal 2 supports function extensions.

If it is determined that the wireless terminal 2 does not support function extensions, in S64, the parameter update unit 111 of the wireless terminal 1 updates AKM included in the communication parameters to a value of AKM supported before function extensions, that is, AKM recognizable by the wireless terminal 2.

Having updated AKM, in S65, the wireless terminal 1 transmits a setting response (DPP Configuration Response) including the communication parameters including the updated AKM to the wireless terminal 2 via the transmitter/receiver 102. Note that the updated AKM is transmitted by being stored in an AKM field of the setting response.

On receipt of the setting response, the wireless terminal 2 connects to the wireless LAN network 4 using the communication parameters included in the setting response.

With the same or similar processes to those described with reference to Figs. 3 to 5, the wireless terminal 1, which is a configurator, may provide communication parameters to the access point (AP) 3, which is an enrollee. The AP 3 may configure the wireless LAN network 4 using the communication parameters provided by the wireless terminal 1.

Note that the communication parameter providing process described above is not limited to the order illustrated in each drawing.

For example, before determining whether AKM is AKM added by DPP function extensions (S91 in Fig. 4), the wireless terminal 1 may determine whether the wireless terminal 2 supports function extensions (S92 in Fig. 4). Alternatively, before transmitting authentication confirmation (S7 in Fig. 3), the wireless terminal 1 may determine, on the basis of information included in the received authentication response, whether the wireless terminal 2 supports function extensions. In this case, after receipt of the setting request (S8: Y in Fig. 3), if it is determined that AKM is AKM added by function extensions (S91: Y in Fig. 4), AKM may be updated without determining whether the wireless terminal 2 supports function extensions.

As described above, according to the present embodiment, in the communication parameter providing process, a communication device which is a configurator may provide communication parameters with AKM which is not a value added by function extensions to an enrollee. A communication device which is an enrollee to which communication parameters are provided may normally recognize AKM, thereby effectively preventing a wireless connection failure due to the invalid determination of the communication parameters, resulting in improved convenience of wireless connection.

Although the configuration of exchanging information for setting communication parameters using an image of QR code (registered trademark) between communication devices has been described in the above-described embodiment, this is not the only possible means for providing information including a public key for enrollee authentication.

For example, instead of capturing an image of QR code (registered trademark), wireless communication such as NFC (Near Field Communication) or Bluetooth (registered trademark) may be used. Alternatively, wireless communication such as IEEE 802.11ad or TransferJet (registered trademark) may be used.

Note that to-be-read QR code (registered trademark) is not limited to QR code displayed on a display, but may be QR code attached in the form of a seal or the like to the housing of communication equipment. In addition, to-be-read QR code (registered trademark) may be one attached to the manual or package such as the cardboard box of communication equipment at the time of sale. In addition, not only QR code, but also one-dimensional code such as barcode or other types of two-dimensional code may be used. In addition, instead of machine-readable information such as QR code, information in a user-readable format may be used.

In addition, although the case in which communication between devices is performed by wireless LAN communication conforming to the IEEE 802.11 series has been described in the above-described embodiment, this is not the only possible wireless communication system applicable to the present embodiment. For example, wireless communication may be implemented by using a wireless communication medium such as wireless USB, MBOA (Multi Band OFDM Alliance), Bluetooth (registered trademark), UWB (Ultra Wide Band), ZigBee, or NFC. In addition, UWB includes wireless USB, wireless 1394, and WINET. Although the example in which communication parameters are provided in order to connect to an access point of a wireless LAN has been described in each embodiment, these are not the only possible communication parameters that may be provided in the present embodiment. For example, a communication device may provide communication parameters for connecting to a group owner of Wi-Fi Direct (registered trademark).

In addition, the present invention may be realized by a program realizing one or more functions of the above-described embodiment. That is, the present invention may be realized by a process of supplying the program to a system or device via a network or storage medium, and reading and executing the program by one or more processors included in the system or device (or CPU, MPU, etc.). In addition, the program may be provided by being recorded in a computer-readable recording medium. In addition, the present invention may be realized by a circuit (such as ASIC) realizing one or more functions.

In addition, the above-described embodiment is applicable to a system including a plurality of items of equipment, such as a host computer, interface equipment, image capturing device, and web application, or to a device including a single item of equipment.

The implementation is not limited to realizing the functions of the embodiment by executing the program read by a computer. For example, an operating system (OS) running on the computer performs part or entirety of the actual processing on the basis of instructions of the program, and, with the processing, the functions of the above-described embodiment may be realized.

Thus, the following claims are appended in order to disclose the scope of the present invention.

## Claims

1. A communication device (1) comprising:
first determination means (105, 110, 111) for determining a version of Device Provisioning Protocol, DPP, supported by another communication device (2) based on information obtained from the another communication device;
second determination means (105, 110, 111) for determining an Authentication and Key Management, AKM, identification information based on the version determined by the first determination means; and
providing means (105, 110, 102) for providing information indicating the AKM determined by the second determination means and a communication parameter which corresponds to the AKM and is used for communication connection to the another communication device in DPP Configuration Response frame.

2. The communication device according to Claim 1, further comprising:
receiving means (105, 102) for receiving a signal conforming to the DPP from the another communication device (2),
wherein, based on the signal received by the receiving means, the first determination means is configured to determine the version of DPP supported by the another communication device.

3. The communication device according to Claim 2, wherein the signal received by the receiving means (105, 102) includes information indicating the version of DPP supported by the another communication device.

4. The communication device according to Claim 2, wherein, based on that the signal received by the receiving means (105, 102) does not include a field indicating the version of DPP supported by the another communication device, the first determination means (105, 110, 111) is configured to determine the version of DPP supported by the another communication device.

5. The communication device according to any one of Claims 2 to 4, wherein the signal received by the receiving means (105, 102) is a signal requesting the communication parameter from the communication device (1).

6. The communication device according to any one of Claims 1 to 5, further comprising:
transmission means (105, 102) for transmitting an authentication request to the another communication device(2), wherein the another communication device is configured to perform authentication based on the authentication request and is configured to respond with an authentication response,
wherein, in a case where the authentication is successful, the providing means (105, 110, 102) is configured to provide the information indicating the AKM determined by the second determination means and the communication parameter which corresponds to the AKM is used for communication connection with the another communication device (2).

7. The communication device according to Claim 6, further comprising:
image capturing means (105, 107, 108) for capturing an image of code including information on a public key of the another communication device (2),
wherein the authentication request includes information about a public key.

8. The communication device according to any one of Claims 1 to 7, wherein the providing means (105, 110, 102) is configured to encrypt a communication parameter corresponding to the AKM determined by the second determination means, and to provide the encrypted communication parameter to the another communication device (2) .

9. The communication device according to any one of Claims 1 to 8, wherein the communication device (1) is a configurator conforming to the DPP, and the another communication device (2) is an enrollee conforming to the DPP.

10. The communication device according to any one of Claims 1 to 8, wherein the AKM is information that indicates which authentication protocol or key exchange algorithm is used.

11. A control method for a communication device (1), comprising:
a first determination step (S91) of determining a version of Device Provisioning Protocol, DPP, supported by another communication device (2) based on information obtained from the another communication device;
a second determination step (S92, S93) of determining an Authentication and Key Management, AKM, based on the version determined by the first determination step; and
a providing step (S94) of providing information indicating the AKM determined by the second determination step and a communication parameter which corresponds to the AKM and is used for communication connection to the another communication device in DPP Configuration Response frame.

12. A program causing a computer to function as the means of the communication device according to any one of Claims 1 to 10.

## Patentansprüche

1. Kommunikationsvorrichtung (1), umfassend:
eine erste Bestimmungseinrichtung (105, 110, 111) zum Bestimmen einer Version eines Gerätebereitstellungsprotokolls, Device Provisioning Protocol DPP, die von einer anderen Kommunikationsvorrichtung (2) unterstützt wird, basierend auf Information, welche von der anderen Kommunikationsvorrichtung erhalten wird;
eine zweite Bestimmungseinrichtung (105, 110, 111) zum Bestimmen einer Identifikationsinformation einer Authentifizierungs- und Schlüsselverwaltung, Authentication and Key Management AKM, basierend auf der von der ersten Bestimmungseinrichtung bestimmten Version; und
eine Bereitstellungseinrichtung (105, 110, 102) zum Bereitstellen von Information, welche die von der zweiten Bestimmungseinrichtung bestimmte AKM angibt, und eines Kommunikationsparameters, welcher der AKM entspricht und für eine Kommunikationsverbindung mit der anderen Kommunikationsvorrichtung verwendet wird, in einem DPP-Konfigurationsantwort-, DPP Configuration Response-, Frame.

2. Kommunikationsvorrichtung nach Anspruch 1, ferner umfassend:
eine Empfangseinrichtung (105, 102) zum Empfangen eines dem DPP entsprechenden Signals von der anderen Kommunikationsvorrichtung (2),
wobei, basierend auf dem von der Empfangseinrichtung empfangenen Signal, die erste Bestimmungseinrichtung konfiguriert ist, die von der anderen Kommunikationsvorrichtung unterstützte Version des DPP zu bestimmen.

3. Kommunikationsvorrichtung nach Anspruch 2, wobei das von der Empfangseinrichtung (105, 102) empfangene Signal Information enthält, welche die von der anderen Kommunikationsvorrichtung unterstützte Version des DPP angibt.

4. Kommunikationsvorrichtung nach Anspruch 2, wobei die erste Bestimmungseinrichtung (105, 110, 111) konfiguriert ist, basierend darauf, dass das von der Empfangseinrichtung (105, 102) empfangene Signal kein Feld enthält, welches die von der anderen Kommunikationsvorrichtung unterstützte Version des DPP angibt, die von der anderen Kommunikationsvorrichtung unterstützte Version des DPP zu bestimmen.

5. Kommunikationsvorrichtung nach einem der Ansprüche 2 bis 4, wobei das von der Empfangseinrichtung (105, 102) empfangene Signal ein Signal ist, welches den Kommunikationsparameter von der Kommunikationsvorrichtung (1) anfordert.

6. Kommunikationsvorrichtung nach einem der Ansprüche 1 bis 5, ferner umfassend:
eine Übertragungseinrichtung (105, 102) zum Übertragen einer Authentifizierungsanforderung an die andere Kommunikationsvorrichtung (2), wobei die andere Kommunikationsvorrichtung konfiguriert ist, eine Authentifizierung basierend auf der Authentifizierungsanforderung durchzuführen, und konfiguriert ist, mit einer Authentifizierungsantwort zu antworten,
wobei, in einem Fall, in welchem die Authentifizierung erfolgreich ist, die Bereitstellungseinrichtung (105, 110, 102) konfiguriert ist, die Information bereitzustellen, welche die von der zweiten Bestimmungseinrichtung bestimmte AKM angibt, und der Kommunikationsparameter, welcher der AKM entspricht, für eine Kommunikationsverbindung mit der anderen Kommunikationsvorrichtung (2) verwendet wird.

7. Kommunikationsvorrichtung nach Anspruch 6, ferner umfassend:
eine Bilderfassungseinrichtung (105, 107, 108) zum Erfassen eines Bildes eines Codes, welcher Information über einen öffentlichen Schlüssel der anderen Kommunikationsvorrichtung (2) enthält,
wobei die Authentifizierungsanforderung Information über einen öffentlichen Schlüssel enthält.

8. Kommunikationsvorrichtung nach einem der Ansprüche 1 bis 7, wobei die Bereitstellungseinrichtung (105, 110, 102) konfiguriert ist, einen Kommunikationsparameter zu verschlüsseln, welcher der von der zweiten Bestimmungseinrichtung bestimmten AKM entspricht, und den verschlüsselten Kommunikationsparameter der anderen Kommunikationsvorrichtung (2) bereitzustellen.

9. Kommunikationsvorrichtung nach einem der Ansprüche 1 bis 8, wobei die Kommunikationsvorrichtung (1) ein dem DPP entsprechender Konfigurator ist und die andere Kommunikationsvorrichtung (2) ein dem DPP entsprechender Teilnehmer ist.

10. Kommunikationsvorrichtung nach einem der Ansprüche 1 bis 8, wobei die AKM Information ist, welche angibt, welches Authentifizierungsprotokoll oder welcher Schlüsselaustauschalgorithmus verwendet wird.

11. Steuerverfahren für eine Kommunikationsvorrichtung (1), umfassend:
einen ersten Bestimmungsschritt (S91) des Bestimmens einer Version eines Gerätebereitstellungsprotokolls, Device Provisioning Protocol DPP, die von einer anderen Kommunikationsvorrichtung (2) unterstützt wird, basierend auf Information, welche von der anderen Kommunikationsvorrichtung erhalten wird;
einen zweiten Bestimmungsschritt (S92, S93) des Bestimmens einer Authentifizierungs- und Schlüsselverwaltung, Authentication and Key Management AKM, basierend auf der vom ersten Bestimmungsschritt bestimmten Version; und
einen Bereitstellungsschritt (S94) des Bereitstellens von Information, welche die vom zweiten Bestimmungsschritt bestimmte AKM angibt, und eines Kommunikationsparameters, welcher der AKM entspricht und für eine Kommunikationsverbindung mit der anderen Kommunikationsvorrichtung verwendet wird, in einem DPP-Konfigurationsantwort-, DPP Configuration Response-, Frame.

12. Programm, welches einen Computer veranlasst, als die Einrichtungen der Kommunikationsvorrichtung nach einem der Ansprüche 1 bis 10 zu funktionieren.

## Revendications

1. Dispositif de communication (1) comprenant :
un premier moyen (105, 110, 111) de détermination pour déterminer une version du Device Provisioning Protocol, DPP, prise en charge par un autre dispositif de communication (2) sur la base d'informations obtenues à partir de l'autre dispositif de communication ;
un second moyen (105, 110, 111) de détermination pour déterminer des informations d'identification d'authentification et de gestion de clés, AKM, sur la base de la version déterminée par le premier moyen de détermination ; et
un moyen (105, 110, 102) de fourniture pour fournir des informations indiquant l'AKM déterminée par le second moyen de détermination et un paramètre de communication qui correspond à l'AKM et est utilisé pour une connexion de communication à l'autre dispositif de communication dans une trame de réponse de configuration DPP.

2. Dispositif de communication selon la revendication 1, comprenant en outre :
un moyen (105, 102) de réception pour recevoir un signal conforme au DPP à partir de l'autre dispositif de communication (2),
dans lequel, sur la base du signal reçu par le moyen de réception, le premier moyen de détermination est configuré pour déterminer la version du DPP prise en charge par l'autre dispositif de communication.

3. Dispositif de communication selon la revendication 2, dans lequel le signal reçu par le moyen (105, 102) de réception comporte des informations indiquant la version du DPP prise en charge par l'autre dispositif de communication.

4. Dispositif de communication selon la revendication 2, dans lequel, sur la base du fait que le signal reçu par le moyen (105, 102) de réception ne comporte pas de champ indiquant la version du DPP prise en charge par l'autre dispositif de communication, le premier moyen (105, 110, 111) de détermination est configuré pour déterminer la version du DPP prise en charge par l'autre dispositif de communication.

5. Dispositif de communication selon l'une quelconque des revendications 2 à 4, dans lequel le signal reçu par le moyen (105, 102) de réception est un signal demandant le paramètre de communication provenant du dispositif de communication (1).

6. Dispositif de communication selon l'une quelconque des revendications 1 à 5, comprenant en outre :
un moyen (105, 102) de transmission pour transmettre une demande d'authentification à l'autre dispositif de communication (2), dans lequel l'autre dispositif de communication est configuré pour réaliser une authentification sur la base de la demande d'authentification et est configuré pour répondre avec une réponse d'authentification,
dans lequel, dans un cas où l'authentification est réussie, le moyen (105, 110, 102) de fourniture est configuré pour fournir les informations indiquant l'AKM déterminée par le second moyen de détermination et le paramètre de communication qui correspond à l'AKM est utilisé pour une connexion de communication avec l'autre dispositif de communication (2).

7. Dispositif de communication selon la revendication 6, comprenant en outre :
un moyen (105, 107, 108) de capture d'image pour capturer une image de code comportant des informations sur une clé publique de l'autre dispositif de communication (2),
dans lequel la demande d'authentification comporte des informations concernant une clé publique.

8. Dispositif de communication selon l'une quelconque des revendications 1 à 7, dans lequel le moyen (105, 110, 102) de fourniture est configuré pour chiffrer un paramètre de communication correspondant à l'AKM déterminée par le second moyen de détermination, et pour fournir le paramètre de communication chiffré à l'autre dispositif de communication (2).

9. Dispositif de communication selon l'une quelconque des revendications 1 à 8, dans lequel le dispositif de communication (1) est un configurateur conforme au DPP, et l'autre dispositif de communication (2) est un participant conforme au DPP.

10. Dispositif de communication selon l'une quelconque des revendications 1 à 8, dans lequel l'AKM est des informations qui indiquent quel protocole d'authentification ou algorithme d'échange de clés est utilisé.

11. Procédé de commande pour un dispositif de communication (1), comprenant :
une première étape de détermination (S91) consistant à déterminer une version du Device Provisioning Protocol, DPP, prise en charge par un autre dispositif de communication (2) sur la base d'informations obtenues à partir de l'autre dispositif de communication ;
une seconde étape de détermination (S92, S93) consistant à déterminer une authentification et une gestion de clés, AKM, sur la base de la version déterminée par la première étape de détermination ; et
une étape de fourniture (S94) consistant à fournir des informations indiquant l'AKM déterminée par la seconde étape de détermination et un paramètre de communication qui correspond à l'AKM et est utilisé pour une connexion de communication à l'autre dispositif de communication dans une trame de réponse de configuration DPP.

12. Programme amenant un ordinateur à fonctionner comme le moyen du dispositif de communication selon l'une quelconque des revendications 1 à 10.
